Europäisches Patentamt

European Patent Office

Office européen des brevets

(19)

(11) EP 0 894 412 B1

(12) FASCICULE DE BREVET EUROPEEN

(45) Date de publication et mention
de la délivrance du brevet:
**14.01.2004   Bulletin 2004/03**

(21) Numéro de dépôt: **97918227.6**

(22) Date de dépôt: **15.04.1997**

(51) Int Cl.[7]: **H04Q 7/34**

(86) Numéro de dépôt international:
**PCT/FR1997/000670**

(87) Numéro de publication internationale:
**WO 1997/039598 (23.10.1997 Gazette 1997/45)**

(54) **PROCEDE D'ANALYSE DE LA LOCALISATION DU TRAFIC DANS UN RESEAU DE RADIOCOMMUNICATION CELLULAIRE**

ANALYSEVERFAHREN ZUR VERKEHRSBESTIMMUNG IN EINEM ZELLULAREN FUNKKOMMUNIKATIONSNETZ

PROCESS FOR ANALYSING TRAFFIC LOCATION IN A CELLULAR RADIO COMMUNICATION NETWORK

(84) Etats contractants désignés:
**BE DE DK ES GB GR IT NL**
Etats d'extension désignés:
**RO**

(30) Priorité: **18.04.1996  FR 9604865**

(43) Date de publication de la demande:
**03.02.1999   Bulletin 1999/05**

(73) Titulaire: **FRANCE TELECOM**
**75015 Paris (FR)**

(72) Inventeur: **HO-A-CHUCK, Olivier**
**F-75014 Paris (FR)**

(74) Mandataire: **Loisel, Bertrand et al**
**Cabinet Plasseraud**
**65/67 rue de la Victoire**
**75440 Paris Cedex 09 (FR)**

(56) Documents cités:
**EP-A- 0 631 453**

• **M MURATA ET AL: "ENHANCING THE PERFORMANCE OF MOBILE COMMUNICATIONS SYSTEMS" 2ND INTERNATIONAL CONFERENCE ON UNIVERSAL PERSONAL COMMUNICATIONS. PERSONAL COMMUNICATIONS: GATEWAY TO THE 21ST CENTURY, vol. 2, 12 - 15 octobre 1993, OTTAWA, CA, pages 732-736, XP000534227**

# Description

La présente invention concerne un procédé pour analyser la localisation du trafic supporté par une station de base d'un réseau de radiocommunication cellulaire.

Dans un réseau de radiocommunication cellulaire, la localisation du trafic dans une cellule est un problème important. A partir d'un certain stade de densification du réseau, une microcellularisation devient inévitable. Dans un réseau microcellulaire, des stations de base de faible portée sont utilisées pour former des cellules de petite taille (microcellules ou picocellules) incluses dans des cellules de plus grande taille (cellules parapluie). Ces microcellules permettent de soulager les cellules parapluie dans les zones à forte densité de trafic local. En pratique, la mise en place d'un réseau microcellulaire s'effectue souvent par ajout de microcellules à un réseau déjà existant de cellules relativement plus grandes. L'opérateur est alors confronté au problème du repérage des meilleurs sites pour les microcellules.

L'opérateur a donc besoin d'une méthode permettant de déterminer les zones de forte densité de trafic. Le plus souvent, l'opérateur se base sur des données de marketing pour "deviner" les zones à forte densité de trafic. L'opérateur placera ainsi des microcellules dans les rues particulièrement fréquentées, près de centres commerciaux, etc.... L'expérience montre que cette méthode empirique est souvent inefficace.

Dans le cas de cellules à antennes sectorisées, il est possible d'analyser la distribution du trafic sur les différents secteurs, et par un procédé de rotation des secteurs déduire la répartition du trafic par azimuts successifs. Cette méthode a l'inconvénient d'être relativement lourde à mettre en oeuvre et de fournir des résultats peu précis dans le cas d'un réseau urbain.

Une autre possibilité serait d'utiliser une station de base factice qu'on déplacerait dans la cellule en comptant les mobiles qui cherchent à s'y accrocher. Cette méthode pourrait être efficace, mais elle nécessite de gros moyens et est difficile à mettre en oeuvre.

Le document EP-A-0 631 453 décrit un procédé d'analyse de localisation du trafic dans un système de radiocommunication cellulaire, dans lequel on exploite à l'aide d'un réseau neuronal les mesures de paramètres effectuées par les stations mobiles à l'égard des stations de base voisines.

Un but de la présente invention est de fournir un processus de localisation du trafic réel dans une cellule, afin d'orienter la conception d'un réseau de radiocommunication, dans une optique de désaturation ou de microcellularisation.

L'invention prose ainsi un procédé tel que défini dans la revendication 1.

La localisation repose ainsi sur un traitement de résultats de mesures effectuées par les mobiles, ces mesures étant de toute façon nécessaires dans la plupart des réseaux cellulaires, dans le cadre des procédures gestion des ressources radio. Les mesures sont capturées en temps réel, et font ultérieurement l'objet d'un traitement statistique permettant d'identifier les zones à plus forte densité de trafic. La méthode fait appel à des données de cartographie qui peuvent être soit calculées au moyen d'un outil de prédiction dont dispose l'opérateur, soit déterminées expérimentalement en effectuant un parcours de mesures.

D'autres particularités et avantages de la présente invention apparaîtront dans la description ci-après d'exemples de réalisation non limitatifs, en référence aux dessins annexés, dans lesquels :

- la figure 1 est une vue stylisée d'un réseau de radiocommunication cellulaire, montrant en outre les moyens servant à la mise en oeuvre de l'invention ;
- la figure 2 est un organigramme général d'un procédé d'analyse selon l'invention ; et
- les figures 3 à 7 sont des schémas illustrant les estimations des densités de trafic dans un réseau tel que celui schématisé sur la figure 1.

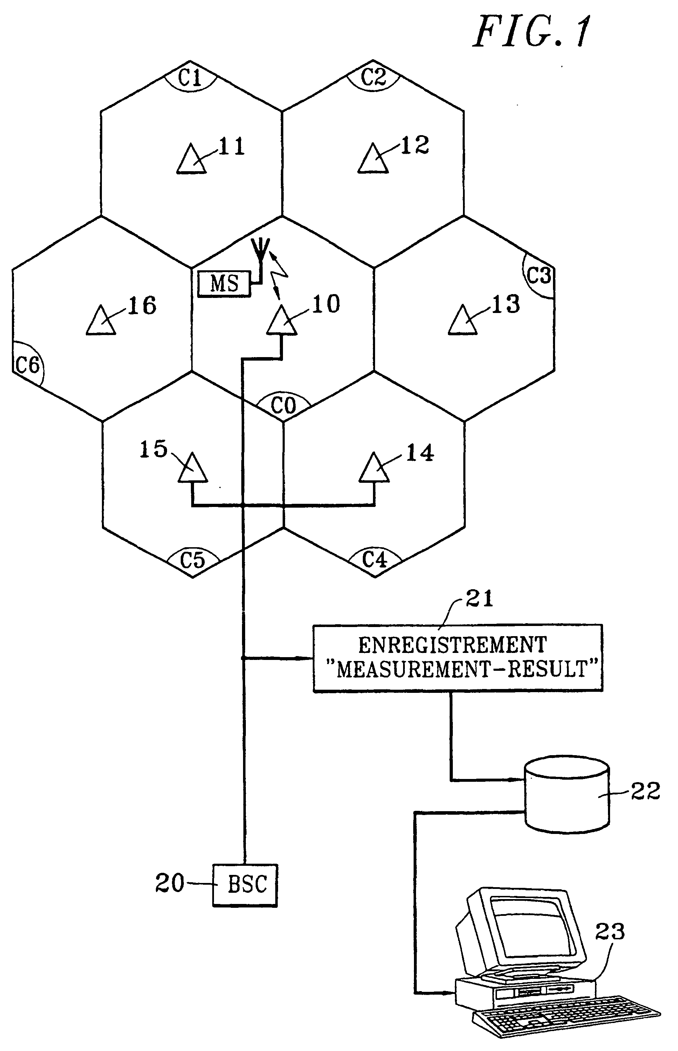

La figure 1 montre sept stations de base (BTS) 10-16 d'un réseau de radiotéléphonie cellulaire. La zone de couverture de chaque station de base 10-16 est appelée cellule C0-C6, et représentée de façon stylisée par un hexagone sur la figure 1.

Dans la suite de la présente description, on supposera que le réseau cellulaire est un réseau de type GSM. Dans un réseau de ce type, chaque station de base est reliée à une unité fonctionnelle appelée contrôleur de station de base (BSC) , chaque BSC pouvant contrôler une ou plusieurs stations de base. Ainsi, dans le cas représenté sur la figure 1, le BSC 20 est associé aux stations de base 10, 14, 15.

L'invention exploite les mesures faites par les stations mobiles MS et servant, dans les réseaux GSM, dans les procédures de contrôle des liaisons radio, notamment de transfert automatique intercellulaire (handover). Les mesures en question sont décrites en détail dans la Recommandation GSM 05.08 (Draft pr ETS 300 578, 2ème Edition, Mars 1995, European Telecommunications Standards Institute). Chaque station de base communique aux stations mobiles qu'elle dessert une liste identifiant un ensemble de stations de base voisines à surveiller par les stations mobiles. Dans le cas du système GSM, l'identifiant d'une station de base voisine se compose d'un numéro de fréquence porteuse d'un canal de diffusion (BCCH) et d'un code d'identification de six bits (BSIC). La station de base communique aux mobiles qu'elle dessert les numéros des fréquences porteuses à surveiller. En examinant le canal BCCH ayant l'une des fréquences de la liste, la station mobile trouve le code d'identification (BSIC) correspondant. La station mobile mesure le niveau de puissance qu'elle reçoit de sa station de base serveuse et des stations de base voisines. Chaque valeur de niveau de puissance est codée de décibel en décibel sur six bits (paramètre RXLEV), la valeur RXLEV=0 correspondant à une puissance inférieure à -110 dBm, et la valeur RXLEV=63 correspondant à une puissance supérieure à -48 dBm (voir Recommandation GSM 05.08).

Ces mesures sont renvoyées par la station mobile à sa station de base serveuse dans un canal appelé SACCH ("Slow Associated Control Channel"), avec une périodicité de 480 ms, c'est-à-dire que, toutes les 480 ms, la station mobile envoie un échantillon de mesure comportant le paramètre RXLEV relatif à la station de base serveuse, et, pour certaines au moins des stations de base voisines, le paramètre RXLEV et l'identifiant correspondant (fréquence + BSIC). Cet échantillon de mesure est compris dans un message appelé MEASUREMENT_REPORT en terminologie GSM. Pour les procédures de contrôle des liaisons radio, la station de base transmet ces échantillons de mesure au BSC dans un message appelé MEASUREMENT_RESULT.

La présente invention propose un traitement statistique des informations contenues dans ces messages MEASUREMENT_RESULT. Une unité d'enregistrement de messages 21 est installée sur l'interface entre la station de base étudiée et son BSC (interface A-BIS), pour examiner les messages échangés sur cette interface, et sélectionner et enregistrer les messages MEASUREMENT_RESULT transmis par la station de base étudiée. Dans l'exemple représenté sur la figure 1, on suppose que la station de base étudiée est la station 10 de la cellule C0 et que l'ensemble de stations de base voisines de celle-ci, dont la liste est envoyée aux stations mobiles desservies, se compose des stations de base 11 à 16 des cellules C1 à C6. Le dispositif d'enregistrement 21 est par exemple constitué par un testeur de protocole commercialisé sous la référence K1103 par la société SIEMENS. Les échantillons de mesure pertinents sont enregistrés sur un support de mémoire 22 tel qu'une disquette. La durée de l'enregistrement dépend du nombre N d'échantillons de mesure dont on a besoin pour analyser la localisation du trafic. Dans le cas de cellules en milieu urbain, on a typiquement besoin de plusieurs dizaines de milliers d'échantillons de mesure, ce nombre pouvant varier largement selon le compromis recherché entre la fiabilité et la complexité des calculs statistiques effectués.

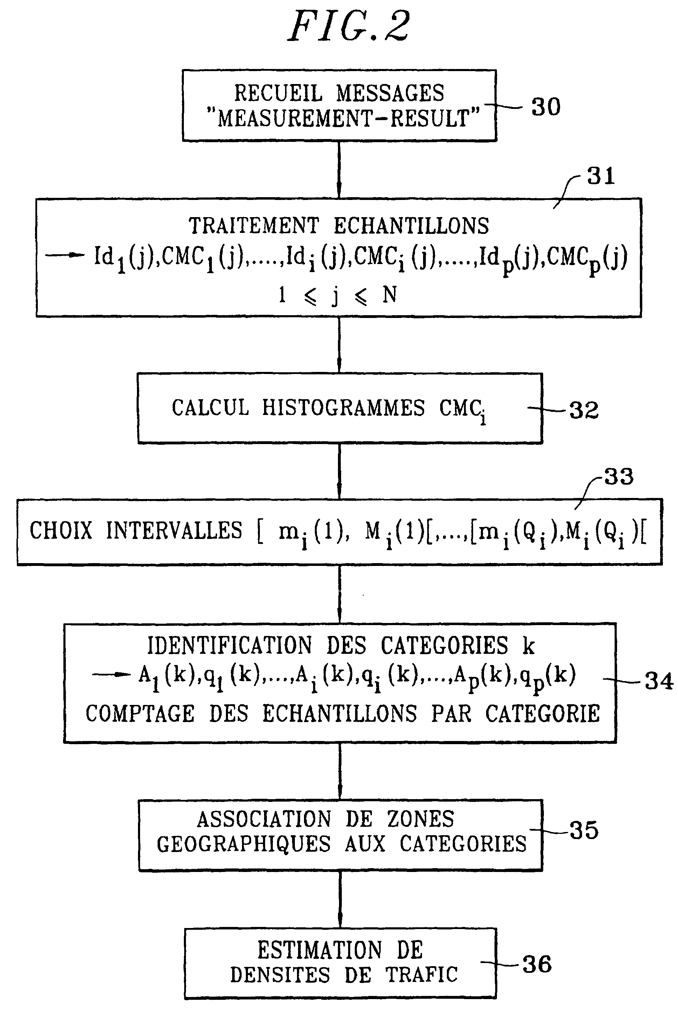

Le dispositif 21 effectue ainsi l'étape 30 de recueil des messages MEASUREMENT_RESULT indiquée sur l'organigramme de la figure 2. Les étapes suivantes 31-36 sont effectuées par un calculateur 23 tel qu'un ordinateur de type PC.

La première étape consiste en un traitement 31 des échantillons de mesure recueillis. Pour éviter de considérer certains affaiblissements dûs aux environnements "in -car" ou "in-door", les niveaux de puissance RXLEV_NCELL(n) mesurés par le mobile relativement à une cellule voisine sont exprimés en valeur relative par rapport au niveau de champ RXLEV_DL mesuré par le mobile depuis la station de base serveuse. Pour la voisine n, on définit ainsi la donnée de mesure CMC(n) par CMC(n) = RXLEV_DL - RXLEX_NCELL(n), les paramètres RXLEV_DL et RXLEV_NCELL(n) étant ceux définis dans la recommandation GSM 05.08. Pour chaque échantillon de mesure, les niveaux de puissance sont rangés en ordre décroissant. Chaque échantillon traité $j$ ($1 \leq j \leq N$) se compose ainsi de p groupes de données $Id_i(j)$, $CMC_i(j)$ pour $1 \leq i \leq p$, où $Id_i(j)$ désigne l'identité (fréquence BCCH et BSIC concaténés) de la station de base voisine de la station serveuse, depuis laquelle la station mobile à l'origine de l'échantillon a mesuré la i-ième plus grande valeur de niveau de puissance parmi les stations voisines surveillées, et $CMC_i(j)$ désigne la valeur correspondante de la donnée de mesure CMC.

Les échantillons traités sont ensuite répartis dans des catégories. Chaque catégorie k est définie par p couples ordonnés $A_i(k)$, $q_i(k)$ ($1 \leq i \leq p$) constitués chacun par l'identité $A_i(k)$ d'une des stations de base voisines C1-C6 et par un intervalle de variation désigné par un index $q_i(k)$. Pour chaque entier i compris entre 1 et p, l'index $q_i(k)$ peut prendre $Q_i$ valeurs 1, 2, ..., $Q_i$, de sorte que $Q_i$ intervalles de variation sont possibles : $[m_i(1), M_i(1)[,...,[m_i(Q_i), M_i(Q_i)[$. Un échantillon traité $j$ est affecté à la catégorie k si pour chaque valeur i de 1 à p, $Id_i(j)=A_i(k)$ et $CMC_i(j) \in [m_i(q_i(k)), M_i(q_i(k))[$. Le nombre de catégories possibles semble a priori très grand ($[m!/(m-p)!]xQ_1x...xQ_p$ si m désigne le nombre de stations voisines surveillées), mais en pratique, le nombre de catégories observées est beaucoup plus faible, et une grande partie d'entre elles peuvent encore être ignorées car elles comportent un nombre d'échantillons non significatif.

Les intervalles de variation des couples de rang i définissant les catégories sont avantageusement déterminés sur la base de la distribution statistique des données de mesure $CMC_i(j)$ des échantillons traités $j=1,...,N$. Ainsi, à l'étape 32, le calculateur détermine les histogrammes des données de mesure $CMC_i$ pour chacun des rangs i, ce qui permet de calculer une moyenne $E_i$ et un écart-type $\sigma_i$ :

$$E_i = \frac{1}{N} \sum_{j=1}^{N} CMC_i(j)$$

$$\sigma_i^2 = \frac{1}{N} \sum_{j=1}^{N} (CMC_i(j) - E_i)^2$$

Ces deux paramètres $E_i$, $\sigma_i$ sont utilisés pour définir les intervalles de variation relatifs au rang i à l'étape 33. Trois possibilités peuvent être mentionnées à cet égard :

(i) définir $Q_i=2$ intervalles par rapport à la moyenne : $]-\infty,E_i[$, $[E_i,+\infty[$ ;

(ii) définir $Q_i=3$ intervalles par rapport à la moyenne et à l'écart type : $]-\infty,E_i-\sigma_i[$, $[E_i-\sigma_i,E_i+\sigma_i[$, $[E_i+\sigma_i,+\infty[$ ;

(iii) définir $Q_i=3$ intervalles par rapport à la moyenne et à l'écart-type et à une marge $\Delta_i$ tenant compte de l'atténuation: $]-\infty,E_i-\sigma_i-\Delta_i[$,$[E_i-\sigma_i-\Delta_i,E_i+\sigma_i+\Delta_i[$, $[E_i+\sigma_i+\Delta_i, +\infty[$.

Il est bien entendu possible d'adopter des définitions d'intervalles différentes pour les différents rangs i. On a constaté que la méthode (iii) fournissait les meilleurs résultats, avec typiquement des valeurs $\Delta_i$ représentant des écarts de puissance de 5 à 10 dB.

Une fois que les intervalles de variation ont été choisis, le calculateur 23 exécute l'étape 34 d'identification des catégories k et de comptage des échantillons par catégorie. Cette étape peut être exécutée au moyen d'une boucle sur les N échantillons traités. Pour chaque échantillon j examiné lors de cette boucle, le calculateur détermine si l'une des catégories k précédemment identifiées vérifie $Id_i(j)=A_i(k)$ et $CMC_i(j)\in[m_i(q_i(k)), M_i(q_i(k))[$ pour tout i. Dans l'affirmative, le nombre d'échantillons C(k) affectés à la catégorie k en question est augmenté d'une unité avant d'examiner l'échantillon suivant. Sinon une nouvelle catégorie k' est identifiée en relation avec l'échantillon courant et son nombre C(k') d'échantillons affectés est initialisé à 1 avant d'examiner l'échantillon suivant. A la fin de l'étape 34, les catégories non significatives (C(k) inférieur à une valeur plancher) peuvent être éliminées.

A l'étape 35, le calculateur associe une zone géographique à chaque catégorie identifiée et retenue à l'étape 34. Pour réaliser cette association, le calculateur se fonde sur des données de cartographie des paramètres RXLEV qui peuvent :

-   soit être calculées à l'aide d'un logiciel de simulation approprié dont dispose l'opérateur ;
-   soit être mesurées expérimentalement en faisant parcourir la cellule C0 et ses abords par un ou plusieurs récepteurs enregistrant les niveaux de puissance RXLEV captés des stations 10 à 16.

Un point appartiendra à la zone géographique associée à une catégorie k si une station mobile placée en ce point capte, en provenance de la station de base étudiée et des stations de base $A_i(k)$ (i=1,...,p), des niveaux de puissance tels que $CMC(A_i(k))\in[m_i(q_i(k)),M_i(q_i(k))[$. La zone associée a une catégorie k est ainsi une intersection de zones dans lesquelles sont respectivement vérifiées des inégalités du type $m_i(q_i(k))\leq CMC(A_i(k))<M_i(q_i(k))$.

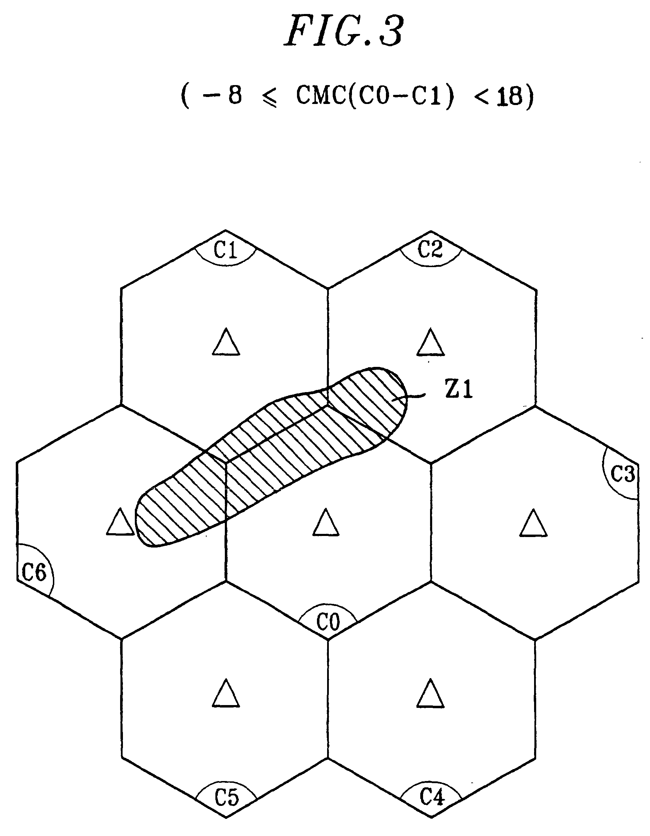

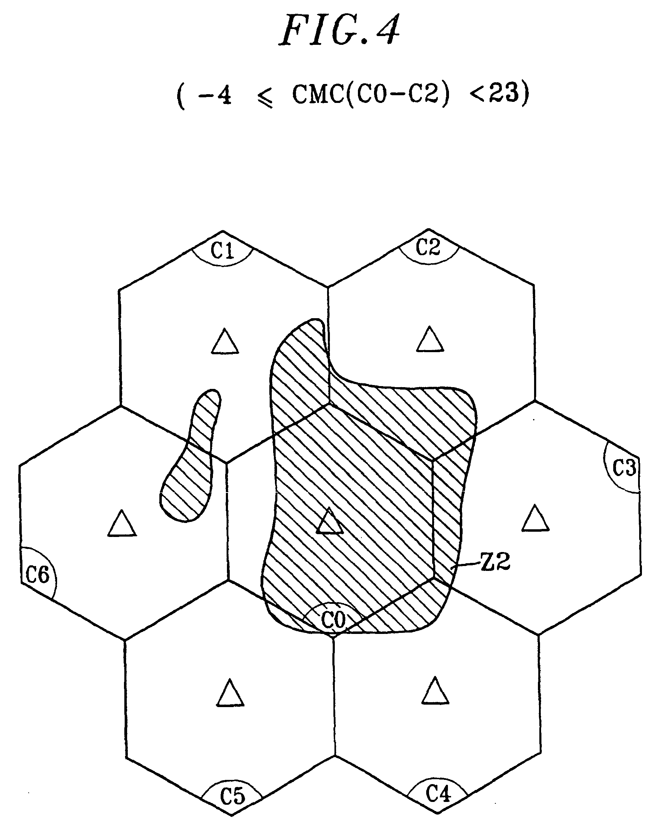

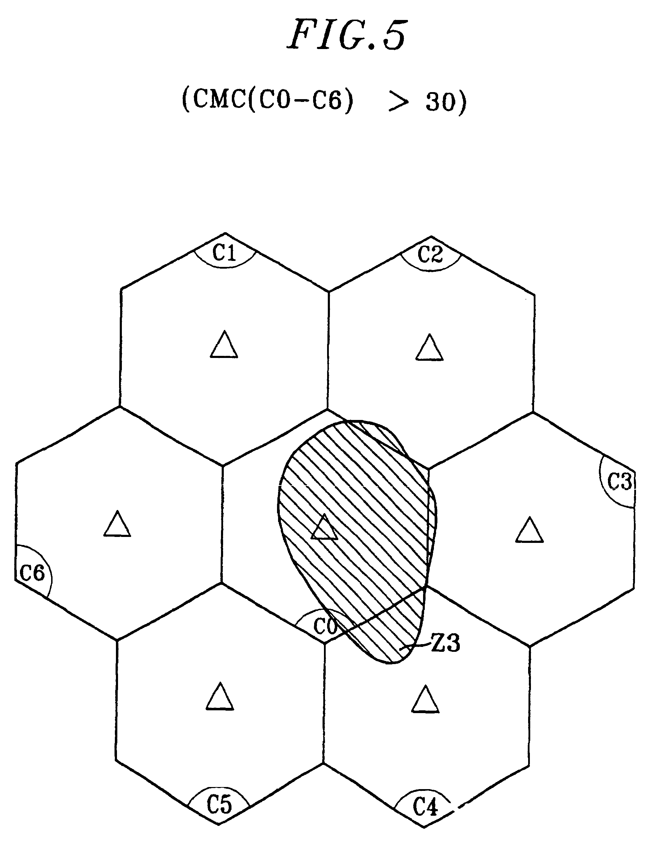

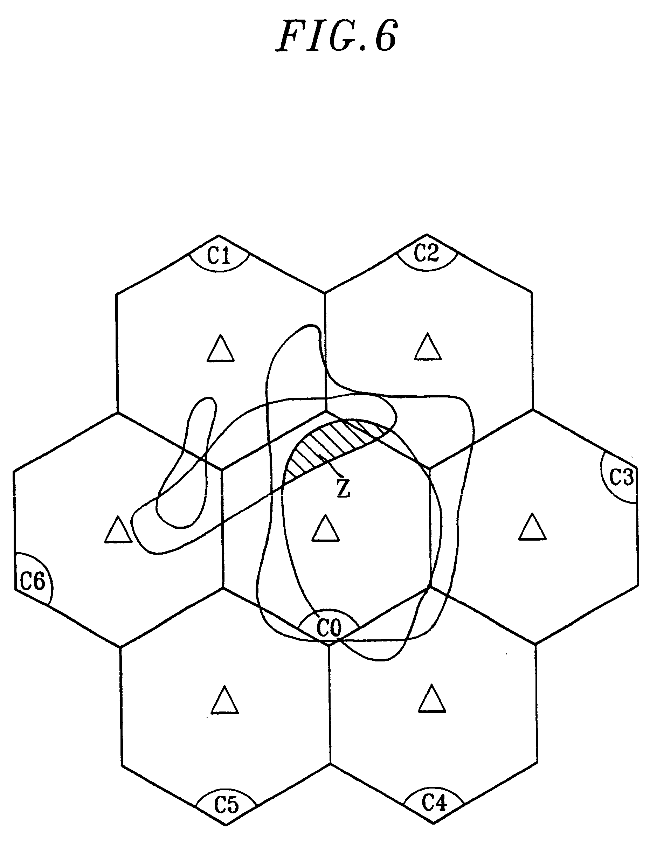

A titre d'illustration, si on considère une catégorie k pour laquelle le couple de rang 1 comporte la station 11 de la cellule C1 et l'intervalle $[-8, 18[$, le couple de rang 2 comporte la station 12 de la cellule C2 et l'intervalle $[-4,23[$, et le couple de rang 3 comporte la station 16 de la cellule C6 et l'intervalle $[30,+\infty[$ (p=3), le calcul d'association sur la base des données cartographiques peut produire les zones Z1, Z2, Z3 représentées hachurées sur les figures 3 à 5, respectivement, la zone géographique finalement associée à la catégorie k étant $Z=Z1\cap Z2\cap Z3$ comme illustré par la figure 6.

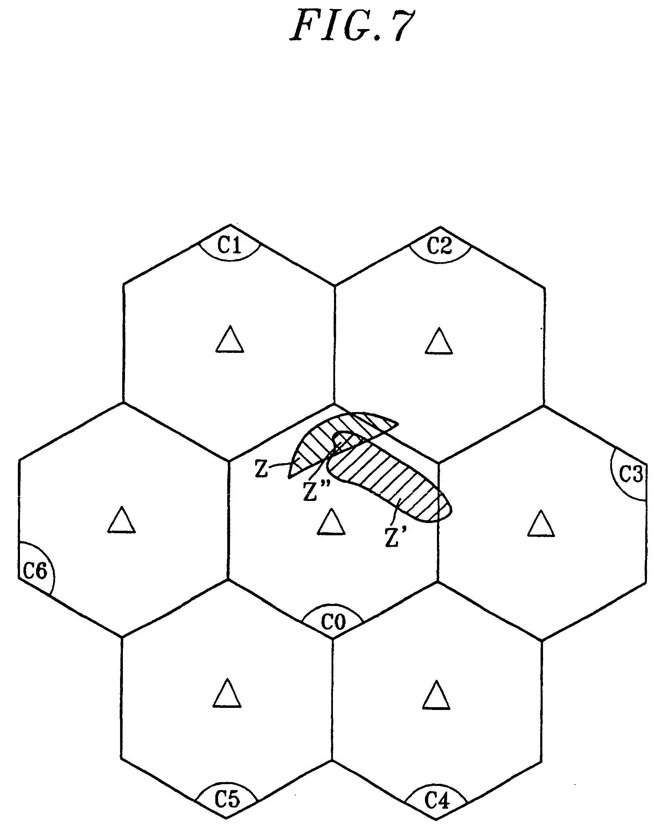

Sur la base des nombres d'échantillons par catégorie et des associations entre les catégories et les zones géographiques, le calculateur 23 procède à l'estimation des densités de trafic dans les zones en question. La densité élémentaire de trafic dans une zone associée à une catégorie est en principe proportionnelle au nombre d'échantillons dans cette catégorie divisé par la surface de la zone. Il est toutefois possible que certains points appartiennent à plusieurs zones associées à des catégories différentes. Il convient alors d'ajouter les densités élémentaires relatives aux catégories concernées. En se référant à la figure 7 à titre d'illustration, si la zone Z de surface 40 est associée à une catégorie k de C(k)=2000 échantillons et si la zone Z' de surface 50 est associée à une catégorie k' de C(k')=1000 échantillons, et si les zones Z et Z' ont une intersection Z'' (les unités sont arbitraires), alors la densité de trafic estimée est de 2000/40=50 dans la zone Z et de 1000/50=20 dans la zone Z', sauf dans la zone Z'' où la densité est estimée à 50+20=70.

Les densités de trafic estimées peuvent ensuite être visualisées, par exemple sous forme d'une carte, pour permettre à l'opérateur de déterminer les meilleurs emplacements pour l'installation de nouvelles stations de base.

A titre d'exemple, la demanderesse a pu vérifier les bonnes performances du procédé d'analyse de localisation de trafic, en générant artificiellement du trafic dans une petite zone d'une cellule de surface 0,23 km². La station de base étudiée comportait m=6 stations voisines. Le nombre de voisines retenues pour analyser la localisation du trafic était de p=3. $Q_1=Q_2=Q_3=3$ intervalles de variation étaient employés pour chaque rang (méthode (iii) ci-dessus). Le nombre de catégories a priori possibles était de 3240, mais, parmi N=81322 échantillons traités, seules 365 catégories ont été observées, et seules 20 d'entre elles ont été traitées (5,5% du nombre total de catégories observées, représentant 91% du nombre total d'échantillons N, les autres catégories comportant un nombre non significatif d'échantillons). La mise en oeuvre du procédé selon l'invention a permis d'observer comme prévu un trafic très localisé, l'outil de prédiction employé ayant permis de localiser la zone où était généré le trafic artificiel avec une précision de l'ordre de 15 mètres.

**Revendications**

1.  Procédé pour analyser la localisation du trafic supporté par une station de base étudiée (10) d'un réseau cellulaire de radiocommunication, chaque station mobile (MS) desservie par la station de base étudiée transmettant périodiquement à la station de base étudiée des échantillons de mesure comportant chacun des valeurs d'un paramètre radio mesuré par ladite station mobile relativement à la station de base étudiée et à plusieurs stations de base voisines identifiées dans un ensemble prédéterminé de stations de base voisines (11-16) de la station de base étudiée, **caractérisé par** les étapes suivantes :

- on recueille des échantillons de mesure reçus par la station de base étudiée ;
- on traite les échantillons de mesure recueillis de manière à produire un échantillon traité de p groupes de données à partir de chaque échantillon de mesure issu d'une station mobile, chaque groupe de données incluant un identifiant ($Id_i(j)$) d'une des stations de base voisines dudit ensemble prédéterminé et une donnée de mesure ($CMC_i(j)$) dépendant de la valeur du paramètre radio mesuré par la station mobile relativement à la station de base voisine identifiée, les groupes de données de chaque échantillon traité étant ordonnés de façon qu'un groupe de rang i ($1 \leq i \leq p$) corresponde à la i-ième plus grande valeur du paramètre radio mesuré relativement aux stations de base voisines dudit ensemble ;
- on répartit les échantillons traités en catégories, chaque catégorie étant associée, pour chaque entier i compris entre 1 et p, à un couple de rang i constitué par un identifiant ($A_i(k)$) d'une station de base dudit ensemble prédéterminé et par un intervalle de variation ($[m_i(q_i(k))$, $M_i(q_i(k))[$), un échantillon traité étant affecté à une catégorie lorsque, pour chaque entier i compris entre 1 et p, d'une part l'identifiant de station de base du groupe de données de rang i dudit échantillon traité coïncide avec l'identifiant de station de base du couple de rang i associé à ladite catégorie, et d'autre part la donnée de mesure du groupe de données de rang i dudit échantillon traité tombe dans l'intervalle de variation du couple de rang i associé à ladite catégorie ;
- on associe des zones géographiques (Z,Z') respectives à certaines au moins des catégories sur la base de données de cartographie du paramètre radio ; et
- on estime des densités de trafic dans lesdites zones géographiques sur la base des nombres d'échantillons ($C(k)$) affectés aux catégories associées.

2. Procédé selon la revendication 1, **caractérisé en ce que** ledit paramètre radio mesuré par une station mobile relativement à une station de base est un niveau de puissance radio reçue par ladite station mobile depuis ladite station de base.

3. Procédé selon la revendication 1 ou 2, **caractérisé en ce que** la donnée de mesure (CMC) incluse dans un groupe de données d'un échantillon traité produit à partir d'un échantillon de mesure issu d'une station mobile est une différence entre la valeur du paramètre radio mesuré par ladite station mobile relativement à la station de base voisine identifiée dans ledit groupe de données et la valeur du paramètre radio mesuré par ladite station mobile relativement à la station de base étudiée.

4. Procédé selon l'une quelconque des revendications 1 à 3, **caractérisé en ce que** pour chaque entier i compris entre 1 et p, les intervalles de variation des couples de rang i associés aux catégories sont déterminés sur la base de la distribution statistique des données de mesure des groupes de rang i des échantillons traités.

**Claims**

1. Method for analysing the localization of traffic supported by a base station (10) of a cellular radiocommunications network under study, each mobile station (MS) served by the base station under study periodically transmitting measurement samples to the base station under study, each sample comprising values of a radio parameter measured by the said mobile station relative to the base station under study, and relative to several neighbouring base stations within a predetermined group of base stations (11-16) adjoining the base station under study, **characterised by** the following steps :

- the measurement samples received by the base station under study are collected ;
- the measurement samples collected are processed so as to produce a processed sample of p data sets from each measurement sample sent from a mobile station, each data set comprising an identifier ($Id_i$ (j)) of one of the adjoining base stations of the said predetermined group and a measured data value ($CMC_i$ (j)) which depends on the value of the radio parameter measured by the mobile station relative to the identified adjoining base station, the data sets from each processed sample being ordered so that a set of rank i ($1 \leq i \leq p$) corresponds to the i-th highest value of the radio parameter measured relative to the adjoining base stations of the said group ;
- the processed samples are organised in categories, each category being associated with a couple of rank i , for every integer i from 1 to p inclusive, constituted by an identifier ($A_i(k)$) of a base station from the said predetermined group and by a variation interval ($[m_i(q_i(k))$, $M_i(q_i(k))[$), a processed sample being assigned to a category when, for every integer i from 1 to p inclusive, on the one hand the base station identifier from the data set of rank i in the said processed sample matches the base station identifier in the couple of rank i associated with the said category, and on the other the measured data value from the data set of rank i in the said processed sample falls within the variation interval of the couple of rank i associated with the said category ;

- respective geographic zones (Z, Z') are associated with at least some of the categories on the basis of the cartographic data of the radio parameter ; and

- the densities of traffic in the said geographic zones are estimated on the basis of the number of samples (C(k)) assigned to the associated categories.

**2.** Method according to claim 1, **characterised in that** the said radio parameter measured by a mobile station relative to a base station is a power level received by the said mobile station from the said base station.

**3.** Method according to claim 1 or 2, **characterised in that** the measured data value (CMC) included in a data set of a processed sample produced from a measurement sample sent from a mobile station is a difference between the radio parameter value measured by the said mobile station relative to the adjoining base station identified in the said data set and the radio parameter value measured by the said mobile station relative to the base station under study.

**4.** Method according to any one of claims 1 to 3, **characterised in that**, for every integer from 1 to p inclusive, the variation intervals of the couples of rank i associated with the categories are determined on the basis of the statistical distribution of the measured data in the sets of rank i in the processed samples.

**Patentansprüche**

**1.** Verfahren zum Analysieren der Verkehrsbestimmung, gestützt durch eine untersuchte Basisstation (10) eines zellulären Funkkommunikationsnetzes, wobei jede von der Basisstation versorgte Mobilstation (MS) zu der untersuchten Basisstation periodisch Messproben überträgt, deren jede Werte eines Funkparameters enthält, der von der Mobilstation relativ zu der untersuchten Basisstation und zu mehreren benachbarten Basisstationen, die in einer vorgegebenen Gruppe von benachbarten Basisstationen (11-16) der untersuchten Basisstation identifiziert werden, gemessen wird, **gekennzeichnet durch** die folgenden Schritte:

- das Aufnehmen der Messproben, die von der untersuchten Basisstation empfangen werden;
- das Verarbeiten der aufgenommenen Messproben auf solche Weise, dass aus jeder von einer Mobilstation stammenden Messprobe eine verarbeitete Probe von p Datengruppen hergestellt wird, wobei jede Datengruppe eine Identifizierung ($Id_i$ (j)) einer der benachbarten Basisstationen der vorgegebenen Gruppe und ein von dem Wert des von der Mobilstation relativ zu der identifizierten benachbarten Basisstation gemessenen Funkparameters abhängiges Messdatenelement ($CMC_i$ (j)) einschließt, wobei die Datengruppen von jeder verarbeiteten Probe derart geordnet werden, dass eine Gruppe von Rang i ($1 \leq i \leq p$) dem i-ten größeren Wert des relativ zu den benachbarten Basisstationen der Gruppe gemessenen Funkparameters entspricht;
- das Aufteilen der verarbeiteten Proben in Kategorien, wobei jede Kategorie für jede zwischen 1 und p enthaltene ganze Zahl i mit einem Paar von Rang i assoziiert wird, das aus einer Identifizierung ($A_i$ (k)) einer Basisstation der vorgegebenen Gruppe und aus einem Variationsintervall ($[m_i$ ($q_i$ (k)), $M_i$ ($q_i$ (k))[) gebildet wird, wobei eine verarbeitete Probe einer Kategorie zugeordnet wird, wenn für jede zwischen 1 und p enthaltene ganze Zahl i einerseits die Identifizierung der Basisstation der Datengruppe von Rang i der verarbeiteten Probe mit der Identifizierung der Basisstation des mit der Kategorie assoziierten Paares von Rang i übereinstimmt und andererseits das Messdatenelement der Datengruppe von Rang i der verarbeiteten Probe in das Variationsintervall des mit der Kategorie assoziierten Paares von Rang i fällt;
- das Assoziieren der jeweiligen geographischen Zonen (Z, Z') mit zumindest einigen der Kategorien auf der Basis von Kartographiedaten des Funkparameters; und
- das Schätzen der Verkehrsdichte in den geographischen Zonen auf Grundlage der Probennummern (C (k)), die den damit assoziierten Kategorien zugeordnet werden.

**2.** Verfahren nach Anspruch 1, **dadurch gekennzeichnet, dass** der von einer Mobilstation relativ zu einer Basisstation gemessene Funkparameter ein Pegel einer Sendeleistung ist, die ab der Basisstation von der Mobilstation empfangen wird.

3.  Verfahren nach Anspruch 1 oder 2, **dadurch gekennzeichnet, dass** das Messdatenelement (CMC), das in einer Datengruppe einer verarbeiteten Probe, die aus einer von einer Mobilstation stammenden Messprobe hergestellt wurde, enthalten ist, eine Differenz zwischen dem Wert des von der Mobilstation relativ zu der in der Datengruppe identifizierten benachbarten Basisstation gemessenen Funkparameters und dem Wert des von der Mobilstation relativ zu der untersuchten Basisstation gemessenen Funkparameters ist.

4.  Verfahren nach einem der Ansprüche 1 bis 3, **dadurch gekennzeichnet, dass** für jede zwischen 1 und p enthaltene ganze Zahl i die Variationsintervalle der mit den Kategorien assoziierten Paare von Rang i auf Grundlage der statistischen Verteilung der Messdaten der Gruppen von Rang i der verarbeiteten Proben bestimmt werden.

*FIG.1*

## *FIG.2*

RECUEIL MESSAGES
"MEASUREMENT-RESULT" —30

TRAITEMENT ECHANTILLONS
$\longrightarrow Id_1(j), CMC_1(j),....., Id_i(j), CMC_i(j),....., Id_p(j), CMC_p(j)$
$1 \leqslant j \leqslant N$

31

CALCUL HISTOGRAMMES $CMC_i$ —32

CHOIX INTERVALLES $[\ m_i(1),\ M_i(1)[,...,[m_i(Q_i), M_i(Q_i)[$

33

IDENTIFICATION DES CATEGORIES k
$\longrightarrow A_1(k), q_1(k),..., A_i(k), q_i(k),..., A_p(k), q_p(k)$
COMPTAGE DES ECHANTILLONS PAR CATEGORIE

34

ASSOCIATION DE ZONES
GEOGRAPHIQUES AUX CATEGORIES —35

ESTIMATION DE
DENSITES DE TRAFIC —36

# *FIG.3*

$$( -8 \leqslant CMC(C0-C1) < 18)$$

# FIG.4

$$(-4 \leqslant CMC(C0-C2) < 23)$$

# FIG.5

$(CMC(CO-C6) > 30)$

# FIG.6

# FIG.7